# EUROPEAN PATENT APPLICATION

(11) **EP 4 793 812 A1**
(43) Date of publication of application: **19.08.2026**
(21) Application number: 25770207.6
(22) Date of filing: 15.09.2025
(51) Int. Cl.: G06F 21/85, G06F 21/44, G06F 13/42

(54) **ELECTRONIC DEVICE AND METHOD FOR UNLOCKING USING SERIAL UNIVERSAL BUS**

(30) Priority: 26.12.2024 KR 20240197631; 16.01.2025 KR 20250006709
(71) Applicant: Samsung Electronics Co., Ltd., Suwon-si, Gyeonggi-do 16677 (KR)
(72) Inventor: PARK, Youngmin, Suwon-si, Gyeonggi-do 16677 (KR); KIM, Byungjun, Suwon-si, Gyeonggi-do 16677 (KR); SHIN, Dongrak, Suwon-si, Gyeonggi-do 16677 (KR); LEE, Wookwang, Suwon-si, Gyeonggi-do 16677 (KR)
(74) Representative: Appleyard Lees IP LLP
(86) International application number: PCT/KR2025/014353
(87) International publication number: WO 2026/141859

(57) **Abstract**

According to an embodiment, a first electronic device includes a port for a universal serial bus (USB) connection, communication circuitry for performing USB communication with a second electronic device, at least one processor including processing circuitry, and memory including one or more storage media, storing instructions. The instructions, when executed by the at least one processor individually or collectively, cause the first electronic device to identify the USB connection with the second electronic device, request, to the second electronic device, identification information related to the second electronic device, obtain the identification information related to the second electronic device from the second electronic device, based on the identification information, execute an application related to a lock state of the first electronic device, request, to the second electronic device, standard vendor identifier (SVID) list information, and based on the SVID list information, unlock the first electronic device.

## Description

### [Technical Field]

The following descriptions relate to an electronic device and a method for unlocking using a universal serial bus.

### [Background Art]

A universal serial bus (USB) is one of an input/output protocol for connecting electronic devices. As the electronic devices are connected via the USB, the electronic device may receive power from an external electronic device and/or exchange data with the external electronic device.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

According to an embodiment, a first electronic device may include a port for a universal serial bus (USB) connection, communication circuitry for performing USB communication with a second electronic device based on the USB connection, at least one processor including processing circuitry, and memory including one or more storage media, storing instructions. The instructions, when executed by the at least one processor individually or collectively, may cause the first electronic device to identify the USB connection with the second electronic device via the port, request, via the USB connection, to the second electronic device, identification information related to the second electronic device, based on the request of the identification information related to the second electronic device, obtain the identification information related to the second electronic device via the USB connection from the second electronic device, based on the identification information related to the second electronic device, execute an application related to a lock state of the first electronic device, and request, to the second electronic device, standard vendor identifier (SVID) list information, obtain, from the second electronic device, the SVID list information, and based on the SVID list information, unlock the first electronic device.

According to an embodiment, a method performed by a first electronic device, may include identifying a universal serial bus (USB) connection with a second electronic device, requesting, via the USB connection, to the second electronic device, identification information related to the second electronic device, based on the request of the identification information related to the second electronic device, obtaining the identification information related to the second electronic device via the USB connection from the second electronic device, based on the identification information related to the second electronic device, executing an application related to a lock state of the first electronic device, and requesting, to the second electronic device, standard vendor identifier (SVID) list information, obtaining, from the second electronic device, the SVID list information, and based on the SVID list information, unlocking the first electronic device.

According to an embodiment, a non-transitory computer readable storage medium may store one or more programs. The one or more programs may include instructions, when executed by at least one processor of a first electronic device with a port for a universal serial bus (USB) connection and communication circuitry for performing USB communication with a second electronic device based on the USB connection, causing the first electronic device to identify the USB connection with the second electronic device via the port, request, via the USB connection, to the second electronic device, identification information related to the second electronic device, based on the request of the identification information related to the second electronic device, obtain the identification information related to the second electronic device via the USB connection from the second electronic device, based on the identification information related to the second electronic device, execute an application related to a lock state of the first electronic device, and request, to the second electronic device, standard vendor identifier (SVID) list information, obtain, from the second electronic device, the SVID list information, and based on the SVID list information, unlock the first electronic device.

According to an embodiment, a second electronic device may include a port for a universal serial bus (USB) connection, communication circuitry for performing USB communication with a first electronic device based on the USB connection, at least one processor including processing circuitry, and memory including one or more storage media, storing instructions. The instructions, when executed by the at least one processor individually or collectively, may cause the second electronic device to identify the USB connection with the first electronic device via the port, receive a request of identification information related to the second electronic device from the first electronic device, via the USB connection, based on the request of the identification information related to the second electronic device, execute an application to obtain security information for unlocking the first electronic device, identify an input for the security information using the application, convert the security information obtained according to the input, to standard vendor identifier (SVID) list information, and based on receiving a request of the SVID list information from the first electronic device, transmit the SVID list information to the first electronic device.

According to an embodiment, a method for a system including a first electronic device and a second electronic device which support a universal serial bus (USB) connection, may include identifying, by the first electronic device, the USB connection with the second electronic device, requesting, by the first electronic device, identification information related to the second electronic device to the second electronic device via the USB connection, based on the request, transmitting the identification information related to the second electronic device to the first electronic device and identifying an input for security information for unlocking the first electronic device, by the second electronic device, converting, by the second electronic device, the security information obtained according to the input, to standard vendor identifier (SVID) list information, requesting, by the first electronic device, the SVID list information to the second electronic device based on the identification information related to the second electronic device, transmitting, by the second electronic device, the SVID list information to the first electronic device based on the request for the SVID list information, and unlocking, by the first electronic device, the first electronic device based on the SVID list information.

All of the features disclosed herein may be combined with any of the embodiments disclosed herein, in any combinaton.

### [Description of the Drawings]

FIG. 1 is a block diagram of an electronic device in a network environment according to an embodiment.
FIG. 2 illustrates an example of a first electronic device and a second electronic device according to an embodiment.
FIG. 3 illustrates an example of a simplified block diagram of a first electronic device and a second electronic device according to an embodiment.
FIG. 4 illustrates an example of a pin layout of a USB port according to an embodiment.
FIG. 5 illustrates a specific example in which a role for a USB connection is determined according to an embodiment.
FIG. 6 illustrates an example of a biphase Manchester coding (BMC) according to an embodiment.
FIG. 7 illustrates an example of an operation of a first electronic device and a second electronic device for entering an alternate mode according to an embodiment.
FIG. 8 illustrates an example of a message including SVID list information according to an embodiment.
FIG. 9 illustrates an example of an operation of a first electronic device and a second electronic device according to an embodiment.
FIG. 10 indicates a code for SVID list information according to an embodiment.
FIG. 11 indicates a code for SVID list information according to an embodiment.
FIG. 12 illustrates an example of an operation of a first electronic device and a second electronic device according to an embodiment.

### [Mode for Invention]

Hereinafter, an embodiment of the present disclosure will be described in detail with reference to a drawing so that those having ordinary knowledge in the art to which the present disclosure belongs may easily implement the present disclosure. However, the present disclosure may be implemented in various different forms and is not limited to the embodiment described herein. In association with a description of the drawing, the same or similar reference numerals may be used for the same or similar components. In addition, in the drawing and the associated description, a description of a well-known function and a configuration may be omitted for clarity and brevity.

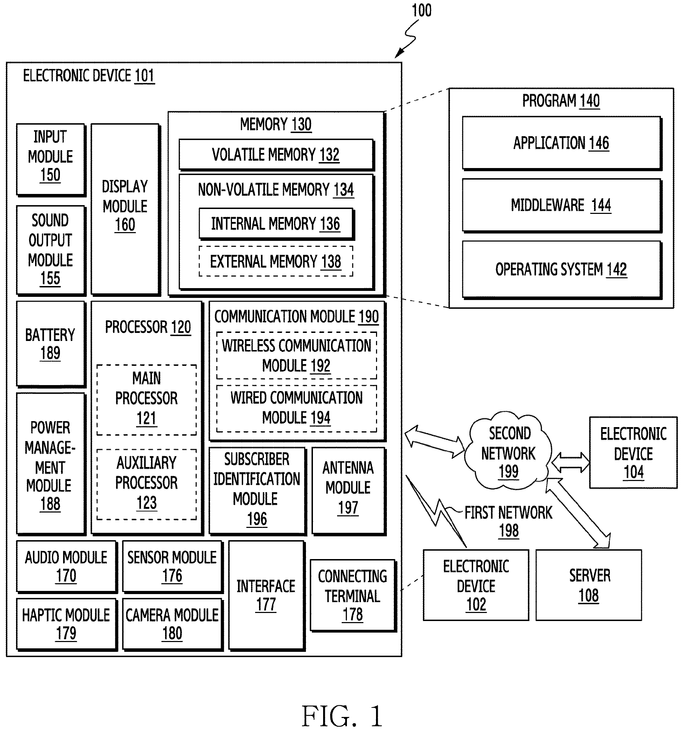

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, a first electronic device (e.g., the electronic device 101) may be connected with a second electronic device via a universal serial bus (USB). For example, the first electronic device and the second electronic device may perform USB communication based on a USB connection using a USB cable. The first electronic device may exchange data with the second electronic device via the USB connection. According to an embodiment, in a case that the first electronic device is locked, the second electronic device may not be able to exchange the data via the USB connection. In a case that the first electronic device is not unlocked due to a failure of the first electronic device (e.g., a display of the first electronic device), a user of the first electronic device may unlock the first electronic device via the second electronic device using the USB connection. In the following specification, a technical feature for unlocking the first electronic device via the second electronic device will be described later.

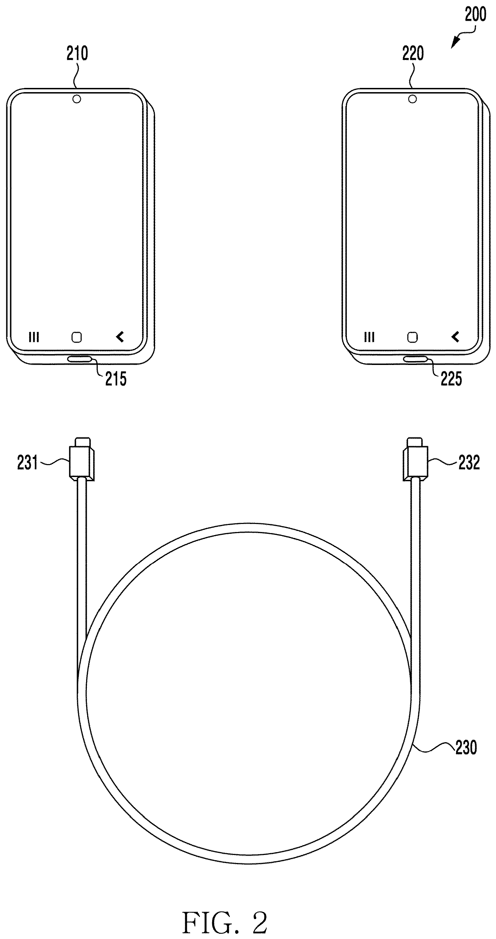

FIG. 2 illustrates an example of a first electronic device and a second electronic device according to an embodiment.

Referring to FIG. 2, a system 200 may include a first electronic device 210 and a second electronic device 220. For example, the first electronic device 210 may correspond to the electronic device 101 of FIG. 1. For example, the second electronic device 220 may correspond to the electronic device 102 of FIG. 1.

According to an embodiment, the first electronic device 210 may communicate with the second electronic device 220 via a wired connection. For example, the first electronic device 210 may communicate with the second electronic device 220 based on a USB connection with the second electronic device 220.

For example, the first electronic device 210 may include a USB port 215 for the USB connection. The second electronic device 220 may include a USB port 225 for the USB connection. For example, each of the USB port 215 and the USB port 225 may be configured based on a C-type (or a type-C) USB port. However, it is not limited thereto. For example, each of the USB port 215 and the USB port 225 may be configured based on one of a A-type (or a type-A) USB port, a B-type (or a type-B) USB port, and the C-type (or the type-C) USB port.

For example, the first electronic device 210 and the second electronic device 220 may be connected via a USB cable 230. The USB cable 230 may include a connector 231 and a connector 232. The connector 231 may be connected with the USB port 215 of the first electronic device 210. The connector 232 may be connected with the USB port 225 of the second electronic device 220.

Hereinafter, for example, the first electronic device 210 and the second electronic device 220 may be connected via the USB connection using the USB cable 230. The USB connection may mean a physical connection via the USB cable 230. The first electronic device 210 and the second electronic device 220 may perform USB communication based on the USB connection. The first electronic device 210 and the second electronic device 220 may exchange data using the USB communication. For example, for the USB communication, a plurality of protocols may be used. For example, for the USB communication, one of a protocol of a USB 1.1 standard, a protocol of a USB 2.0 standard, and/or a protocol of a USB 3.0 standard may be used. In addition to the above-described standards, for the USB communication, a sub-standard of the above-described standards and/or standards following the above-described standards may also be used.

According to an embodiment, a data exchange via the USB communication may be performed only in a case that the first electronic device 210 (or the second electronic device 220) is unlocked according to a security policy during the USB connection. For example, in a state that the first electronic device 210 and the second electronic device 220 are connected via the USB cable 230, the first electronic device 210 may not be unlocked. As an example, in a case that the first electronic device 210 is not unlocked, the second electronic device 220 may not be able to use (or access) a display or a USB device of the first electronic device 210. Therefore, in a case that the first electronic device 210 is difficult to be unlocked due to damage in the display of the first electronic device 210, the first electronic device 210 may not be able to be unlocked via the second electronic device 220.

For example, the first electronic device 210 may operate in one of a plurality of operation modes. As an example, a plurality of modes may include a normal mode, a repair mode, and a guest mode. The normal mode may be a mode set to enable access to all data of the first electronic device 210. The repair mode may be a mode in which no mounting is performed on memory of the first electronic device 210. The guest mode may be a mode in which the mounting is performed on the memory of the first electronic device 210, but access to a storage space for personal information is limited.

According to an embodiment, in a case that the display of the first electronic device 210 is damaged, since the first electronic device 210 may not be able to be unlocked, the operation mode of the first electronic device 210 may not be able to be set (or changed). In the following specification, a technical feature for unlocking the first electronic device 210 using the second electronic device 220 will be described.

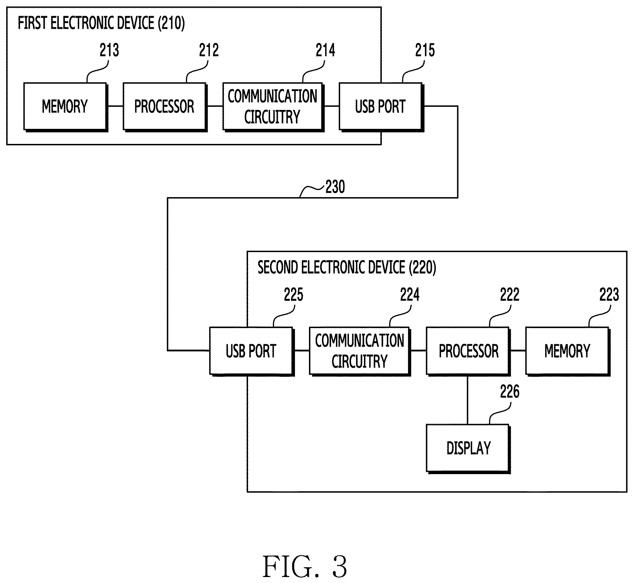

FIG. 3 illustrates an example of a simplified block diagram of a first electronic device and a second electronic device according to an embodiment.

Referring to FIG. 3, for example, a first electronic device 210 (or a second electronic device 220) may include at least some or all of the components of the electronic device 101 of FIG. 1. For example, the first electronic device 210 (or the second electronic device 220) may correspond to the electronic device 101 of FIG. 1.

According to an embodiment, the first electronic device 210 may include at least one of a processor 212, memory 213, communication circuitry 214, and/or a USB port 215. According to an embodiment, for example, at least some of the processor 212, the memory 213, the communication circuitry 214, and/or the USB port 215 may be omitted.

According to an embodiment, the processor 212 may be operatively (or operably) coupled with or connected with the memory 213 and/or the communication circuitry 214. The processor 212 being operatively or operably connected with the memory 213 and/or the communication circuitry 214 may mean that the processor 212 may control the memory 213 and/or the communication circuitry 214. For example, the memory 213 and/or the communication circuitry 214 may be controlled by the processor 212.

According to an embodiment, the processor 212 may include at least a portion of the processor 120 of FIG. 1 or may correspond to at least a portion of the processor 120. For example, the processor 212 may include one or more processors including an application processor (AP) and/or a communication processor (CP). For example, the processor 212 may be implemented with a single chip such as a system on chip (SoC) or may be implemented with a plurality of chips. For example, the processor 212 may be implemented as one integrated circuit or a plurality of integrated circuits. For example, the processor 212 may be arranged in a distributed manner in the first electronic device 210.

According to an embodiment, the memory 213 of the first electronic device 210 may include circuitry, and/or a storage medium for storing data and/or instructions inputted to and/or outputted from the processor 212. The memory 213 may include, for example, volatile memory such as random-access memory (RAM) and/or non-volatile memory such as read-only memory (ROM). The non-volatile memory may be referred to as storage. The volatile memory may include, for example, at least one of dynamic RAM (DRAM), static RAM (SRAM), Cache RAM, or pseudo SRAM (PSRAM). The non-volatile memory may include at least one of, for example, a programmable ROM (PROM), erasable PROM (EPROM), electrically erasable PROM (EEPROM), flash memory, a hard disk, a compact disk, a solid state drive (SSD), or an embedded multi media card (eMMC).

According to an embodiment, the memory 213 may include at least a portion of the memory 130 of FIG. 1 or may correspond to at least a portion of the memory 130 of FIG. 1. For example, the memory 213 may be implemented as a single chip or may be implemented as a plurality of chips. For example, the memory 213 may be implemented as a single integrated circuit or may be implemented as a plurality of integrated circuits. For example, the memory 213 may also be arranged in a distributed manner in the first electronic device 210.

According to an embodiment, the processor 212 of the first electronic device 210 may perform a function and/or an operation indicated by the instructions by executing the instructions of the memory 213 in the first electronic device 210. For example, in a case that the first electronic device 210 includes at least one processor, the at least one processor may be configured to execute the instructions collectively or individually.

According to an embodiment, the communication circuitry 214 of the first electronic device 210 may be used for various radio access technologies (RATs). For example, the communication circuitry 214 may be used to perform direct (e.g., wired) communication with an external electronic device (e.g., the second electronic device 220). However, it is not limited thereto. The communication circuitry 214 may also be used to support wireless communication (e.g., Bluetooth communication, wireless local area network (WLAN) communication, or ultra wideband (UWB) communication).

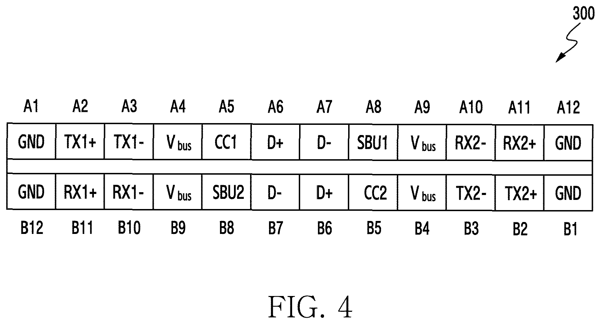

For example, the communication circuitry 214 may be connected with the USB port 215. The communication circuitry 214 may be used to process a signal transmitted from the second electronic device 220 via the USB port 215. For example, the communication circuitry 214 may be referred to as a power delivery integrated circuit (PDIC). For example, the USB port 215 may be configured based on a C-type (or a type-C) USB port. A specific example of the USB port 215 will be described later in FIG. 4.

According to an embodiment, the second electronic device 220 may correspond to the first electronic device 210. For example, a processor 222 of the second electronic device 220 may correspond to the processor 212 of the first electronic device 210. Memory 223 of the second electronic device 220 may correspond to the memory 213 of the first electronic device 210. Communication circuitry 224 of the second electronic device 220 may correspond to the communication circuitry 214 of the first electronic device 210. A USB port 225 of the second electronic device 220 may correspond to the USB port 215 of the first electronic device 210. For example, the second electronic device 220 may further include a display 226. For example, the display 226 may be used to input security information for unlocking the first electronic device 210.

According to an embodiment, the first electronic device 210 and the second electronic device 220 may be connected via a USB cable 230. A USB connection via the USB cable 230 may provide an electrical path for data communication between the first electronic device 210 and the second electronic device 220. For example, the first electronic device 210 and the second electronic device 220 may perform a process for performing the USB communication via the USB connection. For example, the process for performing the USB communication may include a vendor defined message (VDM) process (or VDM communication).

FIG. 4 illustrates an example of a pin layout of a USB port according to an embodiment.

Referring to FIG. 4, a USB port 300 may be an example of the USB port 215 and/or the USB port 225 of FIG. 3. For example, the USB port 300 may be formed based on a C-type (or a type-C) standard. The USB port 300 may include a plurality of pins. The USB port 300 may have a structure based on a receptacle of a C type USB standard. Based on the structure of the receptable of the C type USB standard, a first part (e.g., a surface A) and a second part (e.g., a surface B) may be formed in the USB port 300, and 12 pins may be disposed in each of the first part and the second part.

For example, the 12 pins disposed in the first part (e.g., the surface A) of the USB port 300 may include GND(A1), TX1+(A2), TX1-(A3), V_{BUS}(A4), CC1(A5), D+(A6), D-(A7), SBU1(A8), V_{BUS}(A9), RX2-(A10), RX2+(A11), and GND(A12). The 12 pins disposed in the second part (e.g., the surface B) of the USB port 300 may include GND(B1), TX2+(B2), TX2-(B3), V_{BUS}(B4), CC2(B5), D+(B6), D-(B7), SBU2(B8), V_{BUS}(B9), RX1-(B10), RX1+(B11), and GND(B12). The above-described names of pins may correspond to names included in a standard associated with the receptacle of the C type USB standard.

In an embodiment, TX1+(A2), TX1-(A3), TX2-(B3), and TX2+(B2) may be used for data transmission. In an embodiment, RX2-(A10), RX2+(A11), RX1+(B11), and RX1-(B10) may be used for data reception.

For example, D+(A6), D-(A7), D+(B6), and D-(B7) may be used for the data transmission and/or the data reception. For example, pins of D+(A6), D-(A7), D+(B6), and D-(B7) may be used to transmit and/or receive data according to a protocol of a USB 2.0 standard.

For example, the pins of D+(A6), D-(A7), D+(B6), D-(B7), TX1+(A2), TX1-(A3), RX1-(B10), and RX1+(B11) may be used to transmit and/or receive data according to a protocol of a USB 3.0 standard. As an example, the pins of D+(A6), D-(A7), D+(B6), and D-(B7) may be used for an initial connection (e.g., a handshake process) for the protocol of the USB 3.0 standard. As an example, the pins of TX1+(A2), TX1-(A3), RX1-(B10), and RX1+(B11) may be used for high-speed communication according to the protocol of the USB 3.0 standard.

For example, the pins of D+(A6), D-(A7), D+(B6), D-(B7), TX1+(A2), TX1-(A3), RX1-(B10), RX1+(B11), TX2+(B2), TX2-(B3), RX2-(A10), and RX2+(A11) may be used to transmit and/or receive data according to a protocol of a USB 3.1 standard. As an example, the pins of D+(A6), D-(A7), D+(B6), and D-(B7) may be used for the initial connection (e.g., the handshake process) for the protocol of the USB 3.1 standard. As an example, the pins of TX1+(A2), TX1-(A3), RX1-(B10), RX1+(B11), TX2+(B2), TX2-(B3), RX2-(A10), and RX2+(A11) may be used for high-speed dual-channel communication according to the protocol of the USB 3.1 standard.

In an embodiment, V_{BUS}(A4), V_{BUS}(A9), V_{BUS}(B4), and V_{BUS}(B9) may be used for power supply. In an embodiment, CC1(A5) and CC2(B5) may be used for a channel configuration. In an embodiment, SBU1(A8) and SBU2(B8) may be used to use a side band. In an embodiment, GND(A1), GND(A12), GND(B1), and GND(B12) may be used for grounding.

In an embodiment, CC1(A5) and CC2(B5) may be used to identify insertion (or contact) detection, detachment (or contact release) detection, and a role for a USB connection of a C type USB standard connector (e.g., a plug).

For example, the role for the USB connection may include a source and a sink according to a power flow. As an example, a device performing the source role may supply the power. A device performing the sink role may receive the power.

For example, the role for the USB connection may include a downstream facing port (DFP) and an upstream facing port (UFP) according to a flow of data. As an example, a device performing the DFP role may perform a USB host function. A device performing the UFP role may perform a USB client function.

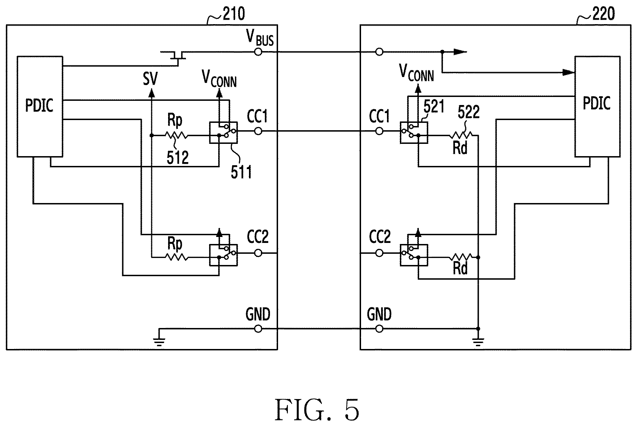

In FIG. 5, a specific example in which the role for the USB connection is determined according to the USB connection between the first electronic device 210 and the second electronic device 220 will be described.

FIG. 5 illustrates a specific example in which a role for a USB connection is determined according to an embodiment.

Referring to FIG. 5, a first electronic device 210 and a second electronic device 220 may be connected via a USB cable 230. According to the USB connection, an electrical path between the first electronic device 210 and the second electronic device 220 may be formed via V_{bus}, CC1 (or CC2), and GND pin.

For example, a role of the first electronic device 210 and the second electronic device 220 may be determined according to the USB connection between the first electronic device 210 and the second electronic device 220. The role of the first electronic device 210 and the second electronic device 220 may be randomly determined. For example, the first electronic device 210 may perform a DFP role, and the second electronic device 220 may perform a UFP role. For example, the first electronic device 210 may perform a source role and the second electronic device 220 may perform a sink role.

According to an embodiment, each of a switch circuit 511 of the first electronic device 210 and a switch circuit 521 of the second electronic device 220 may be toggled by a power delivery integrated circuit (PDIC) (or a configuration channel integrated circuit (CCIC)). As an example, in a case that the first electronic device 210 identifies a pull down resistor (e.g., a resistor 522) in the electrical path of CC1, the first electronic device 210 may perform the source (or the UFP) role. In a case that the second electronic device 220 identifies a pull up resistor (e.g., a resistor 512) in the electrical path of CC1, the first electronic device 210 may perform the source (or the UFP) role.

In FIG. 5, an example in which the pull-down resistor or the pull up resistor is identified in the electrical path of CC1 has been described, but it is not limited thereto. The role of the first electronic device 210 and the second electronic device 220 may be determined according to a pull down resistor or a pull up resistor identified in the electrical path of CC2.

According to an embodiment, the role of the first electronic device 210 and the second electronic device 220 may be changed. For example, the first electronic device 210 may perform the source role and the DFP role. The second electronic device 220 may perform the sink role and the UFP role.

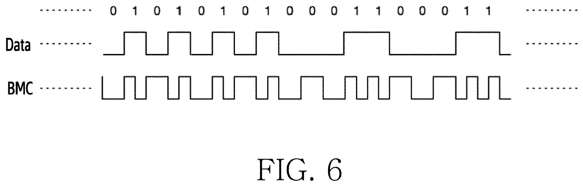

FIG. 6 illustrates an example of a biphase Manchester coding (BMC) according to an embodiment.

Referring to FIG. 6, in order to perform USB communication, a first electronic device 210 and a second electronic device 220 may perform a connection process for USB communication. For example, after a role of each of the first electronic device 210 and the second electronic device 220 is determined, the first electronic device 210 and the second electronic device 220 may perform the connection process for the USB communication.

For example, the connection process for the USB communication may be performed via a CC pin (e.g., CC1, and/or CC2) (or V_{BUS}). For example, the connection process for the USB communication may be performed based on a biphase Manchester coding (BMC) signaling scheme. For example, a message (or a command) transmitted and/or received in the connection process for the USB communication may be encoded based on the BMC. The message transmitted and/or received in the connection process for the USB communication may be referred to as a power delivery (PD) message.

For example, in the BMC, a transition of each bit time (e.g., a unit interval (UI)) of data may occur. When '1' is transmitted, a second transition in the middle of the UI may occur. When '0' is transmitted, the transition may not occur in the middle of the UI. The BMC may effectively achieve a DC balance. As an example, '1' may maintain the DC balance, and two consecutive '0' may also maintain the DC balance.

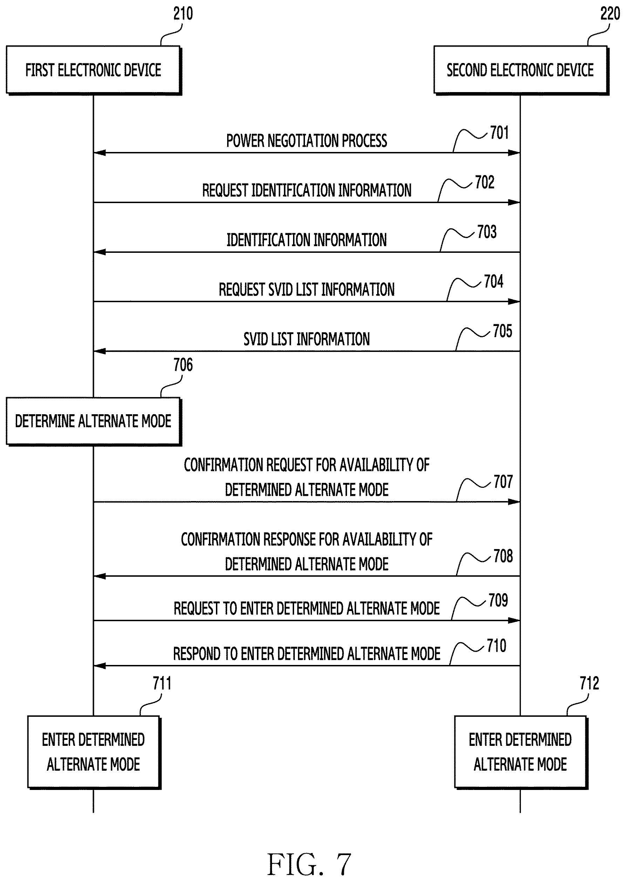

FIG. 7 illustrates an example of an operation of a first electronic device and a second electronic device for entering an alternate mode according to an embodiment.

Referring to FIG. 7, a first electronic device 210 and a second electronic device 220 may be connected via a USB cable 230. The first electronic device 210 may perform a DFP role (or a source role). The second electronic device 220 may perform a UFP role (or a sink role).

According to an embodiment, the first electronic device 210 and the second electronic device 220 may perform a process for entering the alternate mode. The process for entering the alternate mode may include operations 701 to 712. The first electronic device 210 and the second electronic device 220 may perform the operation 701 to perform the process for entering the alternate mode.

In the operation 701, the first electronic device 210 and the second electronic device 220 may perform a power negotiation process based on a USB connection (or a USB connector connection). For example, the first electronic device 210 may transmit a source capability message indicating power functions of the first electronic device 210 to the second electronic device 220. The second electronic device 220 may evaluate the power functions of the first electronic device 210 and transmit a request message for selecting one power level. The first electronic device 210 may transmit an acceptance message with respect to the request message to the second electronic device 220.

In operation 702, the first electronic device 210 may request identification information related to the second electronic device 220 to the second electronic device 220. The first electronic device 210 may request the identification information related to the second electronic device 220 by transmitting an identification information discover message (e.g., a discover identity message (or a command)) to the second electronic device 220. The second electronic device 220 may receive the request of the identification information related to the second electronic device 220 from the first electronic device 210.

In operation 703, the second electronic device 220 may transmit the identification information related to the second electronic device 220 to the first electronic device 210. For example, the identification information may include at least one of vendor identifier (VID) information, product identifier (PID) information, and/or binary coded decimal (BCD) information. The first electronic device 210 may receive the identification information related to the second electronic device 220 from the second electronic device 220.

In operation 704, the first electronic device 210 may request standard vendor identifier (SVID) list information to the second electronic device 220. For example, the SVID may indicate the alternate mode supported by the second electronic device 220. For example, one SVID may indicate one alternate mode. For example, the first electronic device 210 may request the SVID list information to the second electronic device 220 by transmitting a discover SVID message (or a command) to the second electronic device 220. The second electronic device 220 may receive the request for the SVID list information from the first electronic device 210.

In operation 705, the second electronic device 220 may transmit the SVID list information to the first electronic device 210. The second electronic device 220 may transmit the SVID list information to the first electronic device 210 in response to the request for the SVID list information. For example, the second electronic device 220 may transmit the SVID list information to the first electronic device 210 via an acknowledgement (Ack) message of the discover SVID message (or the command). The first electronic device 210 may receive the SVID list information from the second electronic device 220.

In operation 706, the first electronic device 210 may determine the alternate mode. For example, the first electronic device 210 may identify at least one SVID based on the SVID list information received from the second electronic device 220. The at least one SVID may indicate at least one alternate mode supported by the second electronic device 220. The first electronic device 210 may determine one of the at least one alternate mode.

In operation 707, the first electronic device 210 may transmit a confirmation request for availability of the determined alternate mode to the second electronic device 220. The second electronic device 220 may receive the confirmation request for the availability of the determined alternate mode from the first electronic device 210. For example, the first electronic device 210 may request the confirmation for the availability of the determined alternate mode by transmitting a discover mode message (or a command) to the second electronic device 220. As an example, the discover mode message (or the command) may include the SVID corresponding to the determined alternate mode.

In operation 708, the second electronic device 220 may transmit a confirmation response for availability of the determined alternate mode to the first electronic device 210. The first electronic device 210 may receive the confirmation response for the availability of the determined alternate mode from the second electronic device 220. For example, the second electronic device 220 may transmit the confirmation response for the availability of the determined alternate mode to the first electronic device 210 by transmitting the SVID corresponding to the determined alternate mode to the first electronic device 210. According to an embodiment, in a case that the determined alternate mode is not available, the second electronic device 220 may also transmit a NACK message to the first electronic device 210.

In operation 709, the first electronic device 210 may request the second electronic device 220 to enter the determined alternate mode. The second electronic device 220 may receive the request for entering the determined alternate mode. For example, the first electronic device 210 may transmit the SVID corresponding to the determined alternate mode to the second electronic device 220. For example, the first electronic device 210 may request the second electronic device 220 to enter the determined alternate mode by transmitting an enter mode message (or a command) including the SVID corresponding to the determined alternate mode to the second electronic device 220.

In operation 710, the second electronic device 220 may transmit a response for an entering request of the determined alternate mode to the first electronic device 210. For example, by transmitting the SVID corresponding to the determined alternate mode to the first electronic device 210, the second electronic device 220 may transmit the response for the entering request of the determined alternate mode to the first electronic device 210. According to an embodiment, in a case that the second electronic device 220 may not enter the determined alternate mode, the second electronic device 220 may also transmit the NACK message to the first electronic device 210.

In operation 711, the first electronic device 210 may operate in the determined alternate mode based on the response for the entering request of the determined alternate mode.

In operation 712, the second electronic device 220 may operate in the determined alternate mode based on transmitting the response for the entering request of the determined alternate mode.

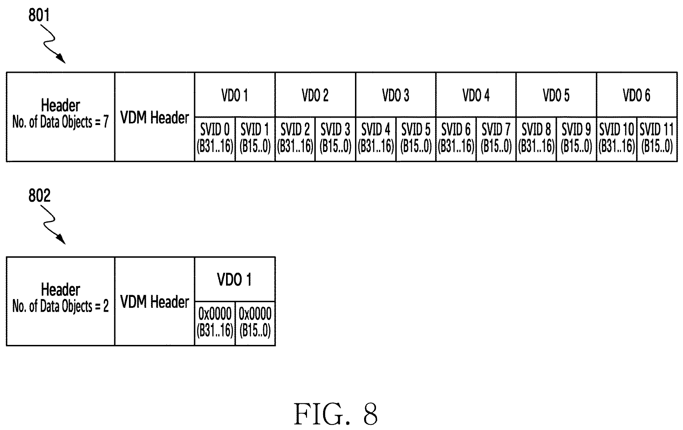

FIG. 8 illustrates an example of a message including SVID list information according to an embodiment.

Referring to FIG. 8, the SVID list information may be transmitted in response to a discover SVID message (or a command). For example, the SVID list information may be transmitted via a message for the response to the discover SVID message (or the command).

For example, the SVID list information may be transmitted via at least one message (or a frame) for the response to the discover SVID message (or the command). For example, the SVID list information may be transmitted via a message 801 and a message 802. The SVID list information may include at least one SVID. The one SVID may be configured based on 16 bits.

According to an embodiment, the message (or the frame) including the SVID list information may include up to 12 SVIDs. For example, the message may include a header, a VDM header, and at least one vendor data object (VDO). The one VDO may be configured based on 32 bits. Accordingly, the one VDO may include two SVIDs.

For example, the message 801 may include six VDOs. Each of the six VDOs may include two SVIDs. The 12 SVIDs may be transmitted via the message 801. For example, the message 802 may be transmitted after the message 801 is transmitted. The message 802 may include one VDO. The SVID included in the message 802 may be set to a value (e.g., "0x0000") indicating an end of the SVID list information.

In FIG. 8, an example in which the 12 SVIDs are transmitted via the message 801 and the message 802 is illustrated, but is not limited thereto. The number of SVIDs included in the SVID list information may be variously set. For example, in a case that the second electronic device 220 supports one alternate mode, a message including only VDO 1 may be transmitted to the first electronic device 210. Among the two SVIDs included in the VDO 1, SVID 0 may be set to a value corresponding to the alternate mode supported by the second electronic device 220. SVID 1 may be set to the value (e.g., "0x0000") indicating the end of the SVID list information.

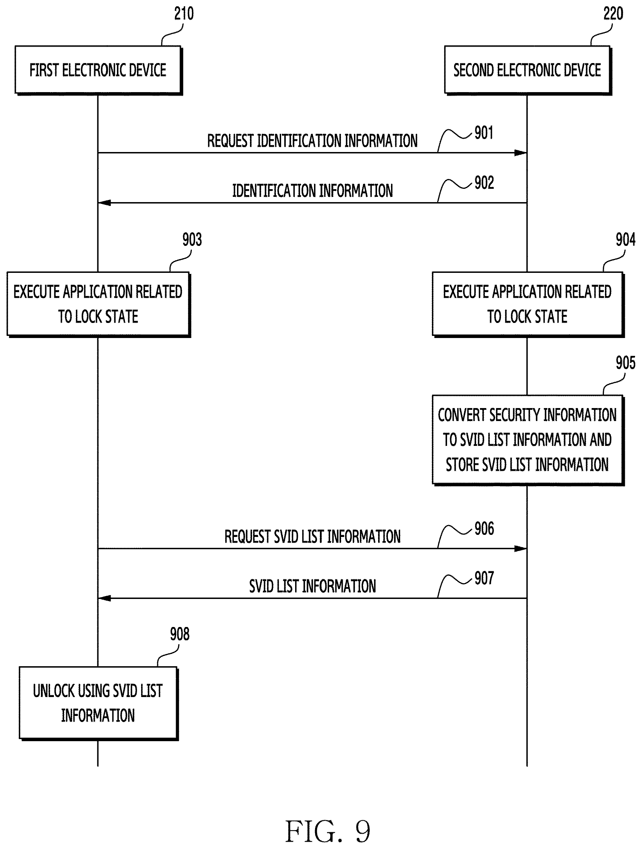

FIG. 9 illustrates an example of an operation of a first electronic device and a second electronic device according to an embodiment.

Referring to FIG. 9, a first electronic device 210 may be a device that may not be able to input via a display. For example, the first electronic device 210 may not include the display. For example, the display of the first electronic device 210 may be in a state that damage (or malfunction) is likely to occur. For example, in a case that the first electronic device 210 is in a lock state, a data exchange via a USB connection may not be able to be performed. For example, the first electronic device 210 may not be controlled via another input device (e.g., a display, a mouse, or a keyboard) connected via a USB. However, the first electronic device 210 and the second electronic device 220 may transmit and receive a message via an electrical path between CC terminals during the USB connection.

The first electronic device 210 and the second electronic device 220 may be connected via a USB cable 230. The first electronic device 210 may perform a DFP role (or a source role). The second electronic device 220 may perform a UFP role (or a sink role). According to an embodiment, in a case that the first electronic device 210 is set to perform the UFP role, the first electronic device 210 may be changed to perform the DFP role via a data role swap function.

Even though not illustrated, the first electronic device 210 and the second electronic device 220 may perform a power negotiation process before operation 901 is performed. The power negotiation process may correspond to the operation 701 of FIG. 7.

In the operation 901, the first electronic device 210 may identify the USB connection with the second electronic device 220. The first electronic device 210 may request identification information related to the second electronic device 220 to the second electronic device 220 via the USB connection with the second electronic device 220. The operation 901 may correspond to the operation 702 of FIG. 7.

In operation 902, the second electronic device 220 may transmit the identification information related to the second electronic device 220 to the first electronic device 210. For example, the identification information may include at least one of vendor identifier (VID) information, product identifier (PID) information, and/or binary coded decimal (BCD) information. The first electronic device 210 may receive the identification information related to the second electronic device 220 from the second electronic device 220.

According to an embodiment, the second electronic device 220 may set the identification information (e.g., the vendor identifier (VID) information, the product identifier (PID) information, and/or the binary coded decimal (BCD) information) related to the second electronic device 220 to one of first reference information (e.g., a first value) and second reference information (e.g., a second value).

For example, the second electronic device 220 may set the identification information related to the second electronic device 220 to the first reference information (e.g., the first value) to perform a process for unlocking the first electronic device 210. The second electronic device 220 may transmit the identification information set to the first reference information (e.g., the first value) to the first electronic device 210 to perform the process for unlocking the first electronic device 210.

For example, the second electronic device 220 may set the identification information related to the second electronic device 220 to the second reference information (e.g., the second value) to perform a process for an alternate mode related to the USB connection. The second electronic device 220 may transmit the identification information set to the second reference information (e.g., the second value) to the first electronic device 210 to perform the process for the alternate mode related to the USB connection.

According to an embodiment, the identification information related to the second electronic device 220 may indicate an operation mode of the first electronic device 210, to be set after the first electronic device 210 is unlocked. For example, the operation mode of the first electronic device 210 may include a normal mode, a repair mode, and a guest mode. For example, the second electronic device 220 may set the identification information (e.g., the PID) to the first value (e.g., '0x687A') so that the first electronic device 210 operates in the normal mode after the first electronic device 210 is unlocked. For example, the second electronic device 220 may set the identification information (e.g., the PID) to the second value (e.g., '0x687B') so that the first electronic device 210 operates in the repair mode after the first electronic device 210 is unlocked. For example, the second electronic device 220 may set the identification information (e.g., the PID) to a third value (e.g., '0x687C') so that the first electronic device 210 operates in the guest mode after the first electronic device 210 is unlocked.

In operation 903, the first electronic device 210 may execute an application related to the lock state based on receiving the identification information related to the second electronic device 220 from the second electronic device 220. For example, the first electronic device 210 may execute the application related to the lock state based on identifying that the identification information corresponds to the first reference information (e.g., the first value). According to an embodiment, the first electronic device 210 may perform the process for the alternate mode related to the USB connection based on identifying that the identification information corresponds to the second reference information (e.g., the second value). The process for the alternate mode related to the USB connection may correspond to the operations 704 to 712 of FIG. 7.

In operation 904, the second electronic device 220 may execute the application related to the lock state. According to an embodiment, the application executed in the first electronic device 210 may be distinguished from the application executed in the second electronic device 220.

According to an embodiment, the second electronic device 220 may execute the application related to the lock state based on transmitting the identification information to the first electronic device 210. The second electronic device 220 may execute the application related to the lock state to obtain security information for unlocking the first electronic device 210 from a user (e.g., a user of the first electronic device 210).

According to an embodiment, the second electronic device 220 may identify an input for the security information via the application related to the lock state. For example, the security information may include at least one of a security pattern, a password, and/or a personal identification number (PIN). For example, the second electronic device 220 may identify an input for selecting a type of the security information via the application related to the lock state. The second electronic device 220 may display (or provide) a screen for inputting for the security information via a display 226 based on the identified input. The second electronic device 220 may identify the input for the security information via the display 226.

In operation 905, the second electronic device 220 may convert the security information to SVID list information and store the SVID list information in memory 223.

For example, the security information may include at least one character. The second electronic device 220 may convert the security information to the SVID list information including at least one SVID by changing an American standard code for information interchange (ASCII) value for the at least one character of the security information to hexadecimal. As an example, 'A' may be converted to '0×40'. As an example, 'B' may be converted to '0x41'.

For example, the security information may include a security pattern. The second electronic device 220 may identify the at least one character corresponding to at least one of points configuring the security pattern. The second electronic device 220 may convert the security information to the SVID list information including the at least one SVID by changing the American standard code for information interchange (ASCII) value for the at least one character to hexadecimal. For example, in a case that the security pattern is configured based on points of 3X3, a character may be allocated to each of the points of 3X3. As an example, '1' may be allocated to a point positioned at (1,1). The point positioned at (1,1) may be converted to '0x31'. As an example, '5' may be allocated to a point positioned at (2, 2). The point positioned at (2,2) may be converted to '0x35'. As an example, '9' may be allocated to a point positioned at (3,3). The point positioned at (3,3) may be converted to '0x39'.

According to an embodiment, the second electronic device 220 may convert each of the at least one character of the security information to the SVID. The second electronic device 220 may convert the security information to the SVID list information including the at least one SVID.

According to an embodiment, the security information may be converted to an encrypted password. The second electronic device 220 may convert the encrypted password to the SVID list information.

In FIG. 9, the operation 904 and the operation 905 are described to be performed after the operation 902 is performed, but they are not limited thereto. For example, the operation 904 and the operation 905 may be performed before the operation 901, or may be performed based on the reception of a request for identification information according to the operation 901. For example, the operation 904 and the operation 905 may be performed based on the first electronic device 210 and the second electronic device 220 being physically connected via the USB cable 230.

In operation 906, the first electronic device 210 may request the SVID list information to the second electronic device 220. The first electronic device 210 may request the SVID list information to the second electronic device 220 for unlocking the first electronic device 210. For example, the first electronic device 210 may request the SVID list information to the second electronic device 220 by transmitting a discover SVID message (or a command) to the second electronic device 220. The operation 906 may correspond to the operation 704 of FIG. 7.

In operation 907, the second electronic device 220 may transmit the SVID list information stored in the memory 223 to the first electronic device 210. For example, the SVID list information may be transmitted to the first electronic device 210, as described in FIG. 8. For example, the first electronic device 210 may obtain the SVID list information using communication circuitry 214 (or a power delivery integrated circuit (PDIC)). The first electronic device 210 may provide the SVID list information to an application for unlocking, for unlocking the first electronic device 210, using the SVID list information.

In operation 908, the first electronic device 210 may unlock the first electronic device 210 using the SVID list information. For example, the first electronic device 210 may identify a plurality of SVIDs based on the SVID list information. The first electronic device 210 may identify the security information based on the plurality of SVIDs. For example, each of the plurality of SVIDs may indicate one character. The first electronic device 210 may obtain the security information by performing conversion on each of the plurality of SVIDs configured based on hexadecimal. The first electronic device 210 may unlock the first electronic device 210 using the security information.

For example, the first electronic device 210 may obtain the encrypted password using the security information. The first electronic device 210 may perform a decryption process via the application for unlocking based on the encrypted password. The first electronic device 210 may unlock the first electronic device 210 using the decrypted password.

For example, the first electronic device 210 may identify whether the first electronic device 210 is unlocked via the security information converted via the SVID list information. Even though not illustrated, the first electronic device 210 may transmit a message indicating one of success, failure, and rejection states to the second electronic device 220 according to whether the first electronic device 210 is unlocked. The second electronic device 220 may provide information indicating one of the success, failure, and rejection states via the display 226 based on the received message.

For example, in a case that the number of failures in unlocking exceeds a reference count, the first electronic device 210 may deactivate a function for unlocking and control the second electronic device 220 to receive the input for the security information again via the second electronic device 220, after a reference time has elapsed.

According to an embodiment, the first electronic device 210 may discard (or delete) the security information (or the SVID list information) after the first electronic device 210 is unlocked. The second electronic device 220 may discard (or delete) the SVID list information based on transmitting the SVID list information to the first electronic device 210. According to an embodiment, the second electronic device 220 may discard (or delete) the security information (or the SVID list information) after the reference time (e.g., 10 minutes) has elapsed after identifying the input for the security information.

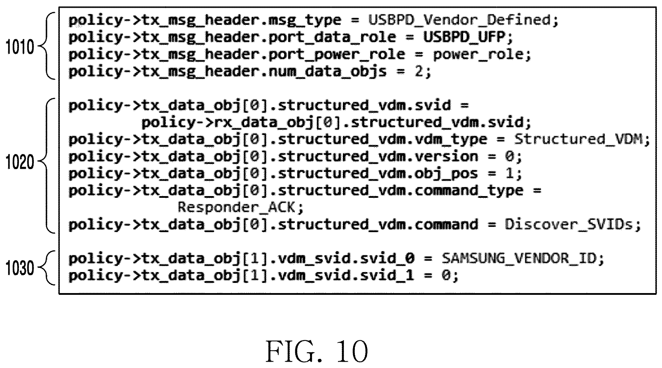

FIG. 10 indicates a code for SVID list information according to an embodiment.

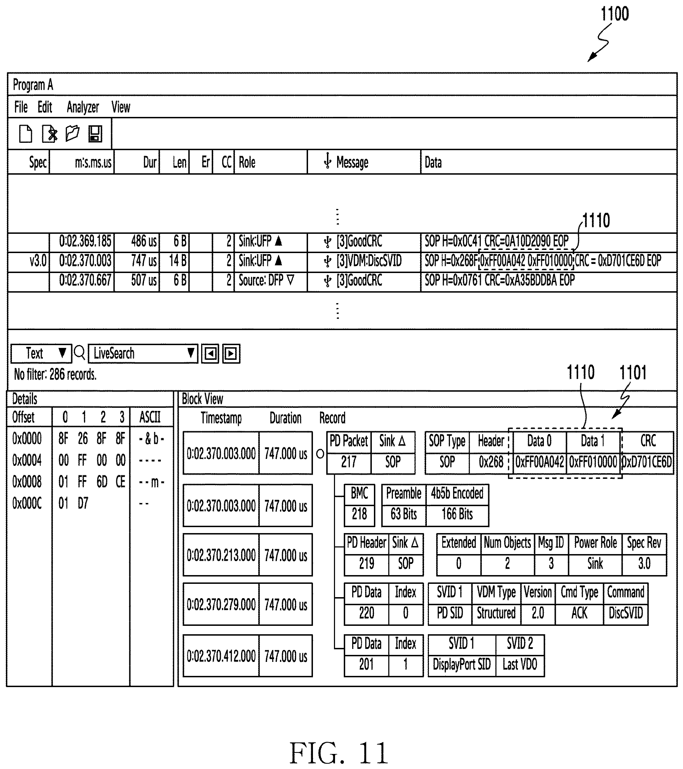

FIG. 11 indicates a code for SVID list information according to an embodiment.

Referring to FIG. 10, a code 1010 may indicate a header of a message (e.g., the message 801 of FIG. 8) including the SVID list information. A code 1020 may indicate a VDM header of the message including the SVID list information. A code 1030 may indicate the SVID list information in the message including the SVID list information. For example, in the code 1030, at least one SVID for unlocking a first electronic device 210 may be identified.

Referring to FIG. 11, a screen 1100 may indicate information on a signal transmitted and received via a USB connection (e.g., an electrical path via a CC pin) between the first electronic device 210 and a second electronic device 220.

For example, a signal 1101 transmitted from the second electronic device 220 to the first electronic device 210 via the electrical path via the CC pin may be identified. The signal 1101 may include SVID list information 1110. DATA 0 identified according to the signal 1101 may correspond to the VDO 0 of FIG. 8. DATA 1 identified according to the signal 1101 may correspond to the VDO 1 of FIG. 8.

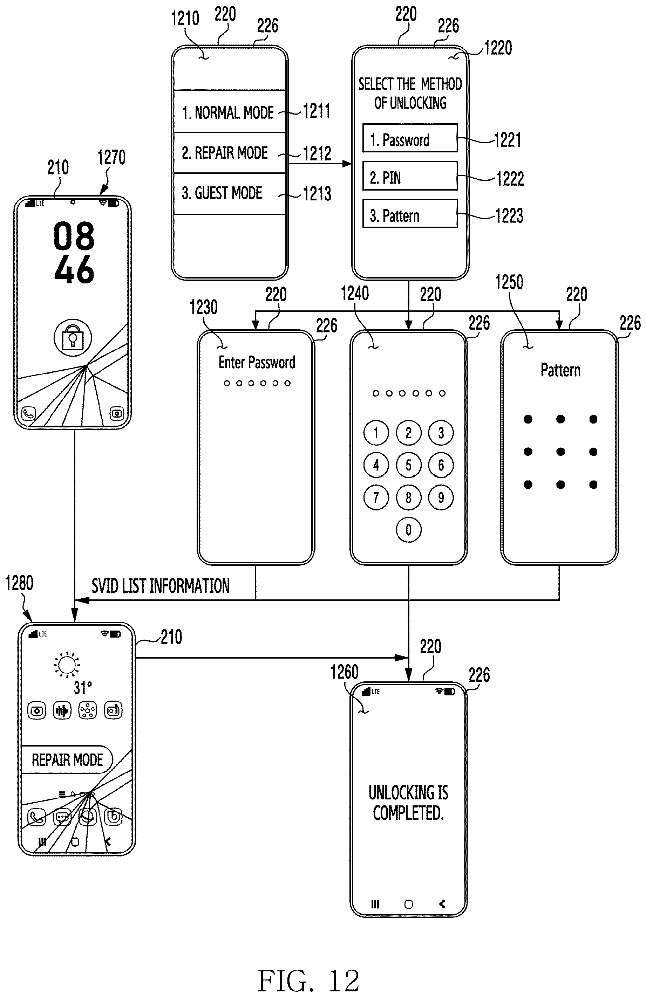

FIG. 12 illustrates an example of an operation of a first electronic device and a second electronic device according to an embodiment.

Referring to FIG. 12, a display of a first electronic device 210 may not be operated normally. In state 1270, the first electronic device 210 may operate in a lock state. According to malfunction of the display of the first electronic device 210, a user of the first electronic device 210 may not be able to unlock the first electronic device 210. According to an embodiment, the first electronic device 210 may include a display that does not support a touch input or may not include the display. For example, the first electronic device 210 may include a watch, a ring, and/or a head mounted device (HMD). Since the first electronic device 210 does not include an input device for the touch input, the first electronic device 210 may fail to be unlocked.

According to an embodiment, the first electronic device 210 and a second electronic device 220 may be connected via a USB cable 230. The first electronic device 210 may perform a DFP role (or a source role). The second electronic device 220 may perform a UFP role (or a sink role).

According to an embodiment, the first electronic device 210 may request identification information related to the second electronic device 220 to the second electronic device 220. The second electronic device 220 may transmit the identification information related to the second electronic device 220 to the first electronic device 210. For example, the second electronic device 220 may display a screen 1210 via a display 226 based on transmitting the identification information related to the second electronic device 220 to the first electronic device 210. For example, the screen 1210 may be displayed based on execution of a preset application. For example, the screen 1210 may be executed based on identifying the connection of the USB cable 230. For example, the screen 1210 may be displayed in response to receiving the request of the identification information.

For example, the screen 1210 may be displayed to receive an input for selecting an operation mode of the first electronic device 210, to be set after the first electronic device 210 is unlocked. The screen 1210 may include an object 1211 for setting the operation mode of the first electronic device 210 to a normal mode after the first electronic device 210 is unlocked. The screen 1210 may include an object 1212 for setting the operation mode of the first electronic device 210 to a repair mode after the first electronic device 210 is unlocked. The screen 1210 may include an object 1213 for setting the operation mode of the first electronic device 210 to a guest mode after the first electronic device 210 is unlocked. For example, the normal mode may be a mode set to enable access to all data of the first electronic device 210. The repair mode may be a mode in which no mounting is performed on memory of the first electronic device 210. The guest mode may be a mode in which the mounting is performed on the memory of the first electronic device 210, but access to a storage space for personal information is limited.

According to an embodiment, the second electronic device 220 may display a screen 1220 via the display 226 based on an input for one (e.g., the object 1212) of the object 1211, the object 1212, and the object 1213. The screen 1220 may be displayed to receive an input for selecting a method for unlocking the first electronic device 210. For example, the screen 1220 may include an object 1221 for unlocking the first electronic device 210 via a password. The screen 1220 may include an object 1222 for unlocking the first electronic device 210 via a personal identification number (PIN). The screen 1220 may include an object 1223 for unlocking the first electronic device 210 via a security pattern.

For example, the second electronic device 220 may display a screen 1230 based on an input for the object 1221. The second electronic device 220 may obtain security information (e.g., a password) for unlocking the first electronic device 210 using the screen 1230.

For example, the second electronic device 220 may display a screen 1240 based on an input for the object 1222. The second electronic device 220 may obtain the security information (e.g., the PIN) for unlocking the first electronic device 210 using the screen 1240.

For example, the second electronic device 220 may display a screen 1250 based on an input for the object 1223. The second electronic device 220 may obtain the security information (e.g., the security pattern) for unlocking the first electronic device 210 using the screen 1250.

According to an embodiment, the second electronic device 220 may convert the obtained security information to SVID list information. The second electronic device 220 may transmit the SVID list information to the first electronic device 210. The first electronic device 210 may obtain the security information based on the SVID list information.

In state 1280, the first electronic device 210 may unlock the first electronic device 210 based on the security information. Based on the security information, the first electronic device 210 may be unlocked. For example, in a case that an input for selecting the object 1212 in the screen 1210 of the second electronic device 220 is received, the first electronic device 210 may operate in the repair mode after being unlocked.

The first electronic device 210 may transmit a message indicating that the first electronic device 210 has been unlocked to the second electronic device 220. The second electronic device 220 may identify that the first electronic device 210 has been unlocked based on receiving the message. The second electronic device 220 may display a screen 1260 indicating that the first electronic device 210 has been unlocked via the display 226.

As the first electronic device 210 is unlocked, the second electronic device 220 may exchange data with the first electronic device 210 via USB communication. The second electronic device 220 may control the first electronic device 210 via the USB communication. For example, the second electronic device 220 may provide a screen outputted from the first electronic device 210 via the display 226 of the second electronic device 220. Therefore, the first electronic device 210 may be operated via the second electronic device 220.

According to an embodiment, in a case that the first electronic device 210 is not unlocked based on the obtained security information, the first electronic device 210 may transmit a message indicating a failure of unlocking to the second electronic device 220. The second electronic device 220 may identify that unlocking of the first electronic device 210 has failed based on receiving the message. The second electronic device 220 may display a screen (not illustrated) indicating that unlocking of the first electronic device 210 has failed via the display 226.

According to an embodiment, the first electronic device 210 may be set to prevent unlocking via an external device. The first electronic device 210 may transmit a message indicating that unlocking has been rejected to the second electronic device 220. The second electronic device 220 may identify that unlocking of the first electronic device 210 has been rejected based on receiving the message. The second electronic device 220 may display a screen (not illustrated) indicating that unlocking of the first electronic device 210 has been rejected via the display 226.

In the above-described embodiments, an example in which the security information for unlocking the first electronic device 210 is obtained via the second electronic device 220 has been described, but is not limited thereto. For example, in a case that the first electronic device 210 is authenticated according to a user login for an application for unlocking, the second electronic device 220 may provide a screen (e.g., the screen 1230, the screen 1240, or the screen 1250) for obtaining the security information. In a case that the first electronic device 210 is authenticated according to the user login for the application for unlocking, the second electronic device 220 (or a server) may transmit a signal causing the first electronic device 210 to execute the application for unlocking via wireless communication.

According to an embodiment, a first electronic device may include a port for a universal serial bus (USB) connection, communication circuitry for performing USB communication with a second electronic device based on the USB connection, at least one processor including processing circuitry, and memory including one or more storage media, storing instructions. The instructions, when executed by the at least one processor individually or collectively, may cause the first electronic device to identify the USB connection with the second electronic device via the port, request, via the USB connection, to the second electronic device, identification information related to the second electronic device, based on the request of the identification information related to the second electronic device, obtain the identification information related to the second electronic device via the USB connection from the second electronic device, based on the identification information related to the second electronic device, execute an application related to a lock state of the first electronic device, and request, to the second electronic device, standard vendor identifier (SVID) list information, obtain, from the second electronic device, the SVID list information, and based on the SVID list information, unlock the first electronic device.

For example, the identification information related to the second electronic device may include at least one of vendor identifier (VID) information, product identifier (PID) information, and/or binary coded decimal (BCD) information.

For example, the instructions, when executed by the at least one processor individually or collectively, may cause the first electronic device to, based on transmitting an identification information discover message to the second electronic device, request, to the second electronic device, the identification information related to the second electronic device.

For example, the instructions, when executed by the at least one processor individually or collectively, may cause the first electronic device to, based on the identification information related to the second electronic device, corresponding to a first value, execute the application related to the lock state of the first electronic device, and request, to the second electronic device, the SVID list information.

For example, the instructions, when executed by the at least one processor individually or collectively, may cause the first electronic device to, based on the identification information related to the second electronic device, corresponding to a second value distinct from the first value, perform a process for an alternate mode related to the USB connection with the second electronic device.

For example, the instructions, when executed by the at least one processor individually or collectively, may cause the first electronic device to, based on the SVID list information, identify security information for unlocking the first electronic device, and unlock, using the security information, the first electronic device.

For example, the instructions, when executed by the at least one processor individually or collectively, may cause the first electronic device to identify a plurality of SVIDs included in the SVID list information, and identify, based on the plurality of SVIDs, the security information. Each of the plurality of SVIDs may indicate one character.

For example, the instructions, when executed by the at least one processor individually or collectively, may cause the first electronic device to obtain an encrypted password using the security information, perform, based on the encrypted password, a decryption process via the application, and unlock the first electronic device using the decrypted password.

For example, the instructions, when executed by the at least one processor individually or collectively, may cause the first electronic device to discard the security information after the first electronic device is unlocked.

For example, the instructions, when executed by the at least one processor individually or collectively, may cause the first electronic device to determine, based on the identification information related to the second electronic device, an operation mode of the first electronic device, to be set after the first electronic device is unlocked.

According to an embodiment, a method performed by a first electronic device, may include identifying a universal serial bus (USB) connection with a second electronic device, requesting, via the USB connection, to the second electronic device, identification information related to the second electronic device, based on the request of the identification information related to the second electronic device, obtaining the identification information related to the second electronic device via the USB connection from the second electronic device, based on the identification information related to the second electronic device, executing an application related to a lock state of the first electronic device, and requesting, to the second electronic device, standard vendor identifier (SVID) list information, obtaining, from the second electronic device, the SVID list information, and based on the SVID list information, unlocking the first electronic device.

For example, the identification information related to the second electronic device may include at least one of vendor identifier (VID) information, product identifier (PID) information, and/or binary coded decimal (BCD) information.

For example, the method may include, based on transmitting an identification information discover message to the second electronic device, requesting, to the second electronic device, the identification information related to the second electronic device.

For example, the method may include, based on the identification information related to the second electronic device, corresponding to a first value, executing the application related to the lock state of the first electronic device, and requesting, to the second electronic device, the SVID list information.

For example, the method may include, based on the identification information related to the second electronic device, corresponding to a second value distinct from the first value, performing a process for an alternate mode related to the USB connection with the second electronic device.

For example, the method may include, based on the SVID list information, identifying security information for unlocking the first electronic device, and unlocking, using the security information, the first electronic device.

For example, the method may include identifying a plurality of SVIDs included in the SVID list information, and identifying, based on the plurality of SVIDs, the security information. Each of the plurality of SVIDs may indicate one character.

For example, the method may include obtaining an encrypted password using the security information, performing, based on the encrypted password, a decryption process via the application, and unlocking the first electronic device using the decrypted password.

According to an embodiment, a second electronic device may include a port for a universal serial bus (USB) connection, communication circuitry for performing USB communication with a first electronic device based on the USB connection, at least one processor including processing circuitry, and memory including one or more storage media, storing instructions. The instructions, when executed by the at least one processor individually or collectively, may cause the second electronic device to identify the USB connection with the first electronic device via the port, receive a request of identification information related to the second electronic device from the first electronic device, via the USB connection, based on the request of the identification information related to the second electronic device, execute an application to obtain security information for unlocking the first electronic device, identify an input for the security information using the application, convert the security information obtained according to the input, to standard vendor identifier (SVID) list information, and based on receiving a request of the SVID list information from the first electronic device, transmit the SVID list information to the first electronic device.

According to an embodiment, a method for a system including a first electronic device and a second electronic device which support a universal serial bus (USB) connection, may include identifying, by the first electronic device, the USB connection with the second electronic device, requesting, by the first electronic device, identification information related to the second electronic device to the second electronic device via the USB connection, based on the request, transmitting the identification information related to the second electronic device to the first electronic device and identifying an input for security information for unlocking the first electronic device, by the second electronic device, converting, by the second electronic device, the security information obtained according to the input, to standard vendor identifier (SVID) list information, requesting, by the first electronic device, the SVID list information to the second electronic device based on the identification information related to the second electronic device, transmitting, by the second electronic device, the SVID list information to the first electronic device based on the request for the SVID list information, and unlocking, by the first electronic device, the first electronic device based on the SVID list information.

According to an embodiment, a non-transitory computer readable storage medium may store one or more programs. The one or more programs may include instructions, when executed by at least one processor of a first electronic device with a port for a universal serial bus (USB) connection and communication circuitry for performing USB communication with a second electronic device based on the USB connection, causing the first electronic device to identify the USB connection with the second electronic device via the port, request, via the USB connection, to the second electronic device, identification information related to the second electronic device, based on the request of the identification information related to the second electronic device, obtain the identification information related to the second electronic device via the USB connection from the second electronic device, based on the identification information related to the second electronic device, execute an application related to a lock state of the first electronic device, and request, to the second electronic device, standard vendor identifier (SVID) list information, obtain, from the second electronic device, the SVID list information, and based on the SVID list information, unlock the first electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A first electronic device comprising:
a port for a universal serial bus (USB) connection;
communication circuitry for performing USB communication with a second electronic device based on the USB connection;
at least one processor including processing circuitry; and
memory including one or more storage media, storing instructions,
wherein the instructions, when executed by the at least one processor individually or collectively, cause the first electronic device to:
identify the USB connection with the second electronic device via the port,
request, via the USB connection, to the second electronic device, identification information related to the second electronic device,
based on the request of the identification information related to the second electronic device, obtain the identification information related to the second electronic device via the USB connection from the second electronic device,
based on the identification information related to the second electronic device:
execute an application related to a lock state of the first electronic device, and
request, to the second electronic device, standard vendor identifier (SVID) list information,
obtain, from the second electronic device, the SVID list information, and
based on the SVID list information, unlock the first electronic device.

2. The first electronic device of claim 1, wherein the identification information related to the second electronic device includes at least one of vendor identifier (VID) information, product identifier (PID) information, or binary coded decimal (BCD) information.

3. The first electronic device of claim 1, wherein the instructions, when executed by the at least one processor individually or collectively, cause the first electronic device to, based on transmitting an identification information discover message to the second electronic device, request, to the second electronic device, the identification information related to the second electronic device.

4. The first electronic device of claim 3, wherein the instructions, when executed by the at least one processor individually or collectively, cause the first electronic device to:
based on the identification information related to the second electronic device, corresponding to a first value:
execute the application related to the lock state of the first electronic device, and
request, to the second electronic device, the SVID list information.

5. The first electronic device of claim 4, wherein the instructions, when executed by the at least one processor individually or collectively, cause the first electronic device to:
based on the identification information related to the second electronic device, corresponding to a second value distinct from the first value, perform a process for an alternate mode related to the USB connection with the second electronic device.

6. The first electronic device of claim 4, wherein the instructions, when executed by the at least one processor individually or collectively, cause the first electronic device to:
based on the SVID list information, identify security information for unlocking the first electronic device, and
unlock, using the security information, the first electronic device.

7. The first electronic device of claim 6, wherein the instructions, when executed by the at least one processor individually or collectively, cause the first electronic device to:
identify a plurality of SVIDs included in the SVID list information, and
identify, based on the plurality of SVIDs, the security information; and
wherein each of the plurality of SVIDs indicates one character.

8. The first electronic device of any one of claims 6 and 7, wherein the instructions, when executed by the at least one processor individually or collectively, cause the first electronic device to:
obtain an encrypted password using the security information,
perform, based on the encrypted password, a decryption process via the application, and
unlock the first electronic device using the decrypted password.

9. The first electronic device of claim 6, wherein the instructions, when executed by the at least one processor individually or collectively, cause the first electronic device to discard the security information after the first electronic device is unlocked.

10. The first electronic device of any one of claims 1 to 9, wherein the instructions, when executed by the at least one processor individually or collectively, cause the first electronic device to determine, based on the identification information related to the second electronic device, an operation mode of the first electronic device, to be set after the first electronic device is unlocked.

11. A method performed by a first electronic device, comprising:
identifying a universal serial bus (USB) connection with a second electronic device,
requesting, via the USB connection, to the second electronic device, identification information related to the second electronic device,
based on the request of the identification information related to the second electronic device, obtaining the identification information related to the second electronic device via the USB connection from the second electronic device,
based on the identification information related to the second electronic device:
executing an application related to a lock state of the first electronic device, and
requesting, to the second electronic device, standard vendor identifier (SVID) list information,
obtaining, from the second electronic device, the SVID list information, and
based on the SVID list information, unlocking the first electronic device.

12. The method of claim 11, wherein the identification information related to the second electronic device includes at least one of vendor identifier (VID) information, product identifier (PID) information, or binary coded decimal (BCD) information,

13. The method of claim 11, wherein the method comprises, based on transmitting an identification information discover message to the second electronic device, requesting, to the second electronic device, the identification information related to the second electronic device, and, based on the identification information related to the second electronic device, corresponding to a first value, executing the application related to the lock state of the first electronic device, and requesting, to the second electronic device, the SVID list information.

14. A method for a system including a first electronic device and a second electronic device which support a universal serial bus (USB) connection, comprising:
identifying, by the first electronic device, the USB connection with the second electronic device;
requesting, by the first electronic device, identification information related to the second electronic device to the second electronic device via the USB connection;
based on the request, transmitting the identification information related to the second electronic device to the first electronic device and identifying an input for security information for unlocking the first electronic device, by the second electronic device;
converting, by the second electronic device, the security information obtained according to the input, to standard vendor identifier (SVID) list information;
requesting, by the first electronic device, the SVID list information to the second electronic device based on the identification information related to the second electronic device;
transmitting, by the second electronic device, the SVID list information to the first electronic device based on the request for the SVID list information; and
unlocking, by the first electronic device, the first electronic device based on the SVID list information.

15. A non-transitory computer readable storage medium storing one or more programs, wherein the one or more programs include instructions, when executed by at least one processor of a first electronic device with a port for a universal serial bus (USB) connection and communication circuitry for performing USB communication with a second electronic device based on the USB connection, cause the first electronic device to:
identify the USB connection with the second electronic device via the port,
request, via the USB connection, to the second electronic device, identification information related to the second electronic device,
based on the request of the identification information related to the second electronic device, obtain the identification information related to the second electronic device via the USB connection from the second electronic device,
based on the identification information related to the second electronic device:
execute an application related to a lock state of the first electronic device, and
request, to the second electronic device, standard vendor identifier (SVID) list information,
obtain, from the second electronic device, the SVID list information, and
based on the SVID list information, unlock the first electronic device.
